# EUROPEAN PATENT APPLICATION

(11) **EP 0 810 052 A1**
(43) Date of publication of application: **03.12.1997**
(21) Application number: 96901992.6
(22) Date of filing: 13.02.1996
(51) Int. Cl.: B23K 10/00

(54) **PLASMA CUTTING METHOD**

(30) Priority: 13.02.1995 JP 23894/95
(71) Applicant: KOMATSU LTD., Minato-ku Tokyo 107 (JP); KOMATSU INDUSTRIES CORPORATION, Minato-ku, Tokyo 107 (JP)
(72) Inventor: SAIO, Katsuo Technical Institute of Komatsu Ltd., Kanagawa-ken 254 (JP); YAMAGUCHI, Yoshihiro Technical Institute, Kanagawa-ken 254 (JP)
(74) Representative: Grünecker, Kinkeldey, Stockmair & Schwanhäusser Anwaltssozietät
(86) International application number: PCT/JP96/00304
(87) International publication number: WO 96/25265

(57) **Abstract**

There is provided a plasma cutting method for use with a plasma cutting apparatus having a nozzle with an orifice whereby a plasma arc is pinched and thereby narrowed and densified and a secondary gas flushing means for delivering a secondary gas so as to surround a forward end portion of the nozzle, characterized in that a non-oxidizing gas is caused to flow as a plasma gas to start the arc and a non-oxidizing gas is caused to flow as the secondary gas to start the arc so that a non-oxidizing gaseous atmosphere may prevail in the vicinity of an outlet of the above mentioned nozzle.

## Description

### TECHNICAL FIELD

The present invention relates to a plasma cutting method for use with a plasma cutting machine and, more particularly, a plasma cutting method which is rendered capable of preventing an orifice portion of the nozzle from being oxidized and damaged when a cutting process is initiated.

### BACKGROUND ART

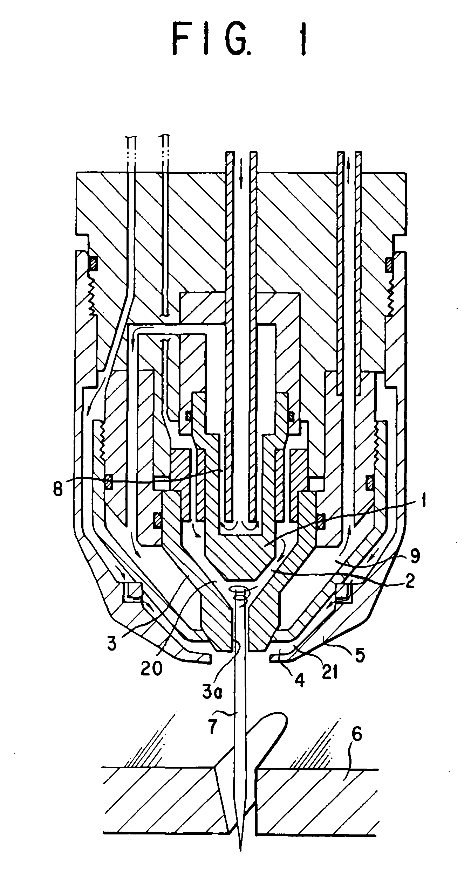

A plasma torch which has hitherto be used in a plasma cutting machine is so constructed as shown in Fig. 1 of the drawings attached hereto, and is provided in its central portion with an electrode 1, inside of which there is formed a cooling chamber 8. Also, outside of the said electrode 1 there is formed a plasma gas passage 2, and a nozzle 3 is disposed so as to surround the said electrode 1 via the said plasma gas passage 2. Also, outside of a forward end of the said nozzle 3 there are formed a cooling chamber 9 and a secondary gas passage 4 along with a shield cap 5 surrounding the said cooling chamber 9 and the said secondary gas passage 4.

A cutting process with a plasma torch of such a construction is carried out by generating a plasma arc 7 that constitutes a main arc between the said electrode 1 and a workpiece 6 while causing a plasma gas 20 to flow through the said plasma gas passage 2. The said plasma arc 7 is pinched and thereby narrowed and densified with an orifice 3a of the said nozzle 3 and is elevated in temperature and accelerated therethrough so as to be flushed towards the workpiece 6 and so as to melt and remove a portion thereof for cutting it.

Then, a water coolant is circulated through the said cooling chambers 8 and 9 which are provided in the interior of the said electrode 1 and the exterior of the said nozzle 3, respectively, so that they may both be cooled. Also, a secondary gas 21 is then flushed through the said secondary gas passage 4 provided inside of the said shield cap 5 so that the above mentioned plasma arc 7 may be surrounded by the said secondary gas 21.

The procedure of generating a plasma arc 7 as mentioned above is set forth below. First, a high frequency voltage is applied across the said electrode 1 and the said nozzle 3 to cause a spark discharge between them, resulting in the occurrence of a pilot arc. Floating on a flow of the plasma gas 20, the discharge spot of the pilot arc on the side of the said electrode 1 is moved to the center of the forward end thereof while the discharge spot on the side of the said nozzle 3 passing through the said orifice 3a thereof is moved to a region of the outlet thereof, eventually reaching the surface of the workpiece 6, thus establishing a said plasma arc 7.

At the same time, the electric power between the said electrode 1 and the said nozzle 3 ceases being supplied. The plasma arc 7 is then pinched and thereby narrowed and densified with the orifice 3a of the said nozzle 3 to result in a high temperature and high velocity flushing jet stream, which acts to form a cut groove of a small width in the workpiece 6 and to allow a cutting thereof to proceed.

Then, while both the said electrode 1 and the said nozzle 3 are exposed to an elevated temperature by the said plasma arc 7, they are, as mentioned above, cooled by the water coolant or air. Also, the electrode 1 which will be elevated in a temperature of several thousand degrees due to the thermo electron emission, in order for its wear to be lowered, is composed of a high melting point material. Such a material, if the said plasma gas 20 contains oxygen, may be hafnium and, if it is a non-oxidizing gas not containing oxygen, may be tungsten.

Also, in a plasma cutting process of the prior art, the kind of the plasma gas 20 that has been employed is related to the material of the workpiece 6. Thus, if a mild steel material is to be cut, the plasma gas 20 makes use of oxygen. If a stainless material or an aluminum material is to be cut, the plasma gas 20 makes use of a non-oxidizing gas not containing oxygen. The said non-oxidizing gas may be composed of a single component gas such as argon or hydrogen or a mixture thereof.

By the way, as mentioned earlier, it should be noted that in plasma cutting, a said plasma arc 7 at a high temperature and with a high velocity is flushed out of the said nozzle 3, thereby locally melting a said workpiece 6 and a portion of the molten metal thereof is blown off to form a cut groove therein, whereby the said workpiece 6 continues to be cut.

Accordingly, it can be seen that the cutting quality of plasma cutting significantly depends on the configuration of the said nozzle 3 through which the plasma arc 7 is pinched and thereby narrowed and densified for flushing out thereof. If the said nozzle 3 wears to be deformed in configuration and the said orifice 3a thereof is enlarged in diameter, the cutting quality should deteriorate.

Since the outlet of the said orifice 3a of the nozzle 3 in particular largely affects the direction and the expansion of the plasma arc 7 flushed out therethrough, it should be noted that if the said outlet of the orifice 3a wears even a little, the cut surface of the workpiece 6 will incline, the molten metal will become unable to be blown off completely and there will be left what is called a dross - a residue of the molten metal in a cut groove, and all of these deleteriously affects the cutting quality largely.

Also, as mentioned earlier, it should be noted that a plasma cutting machine in the prior art is designed to generate a pilot arc between the said electrode 1 and the said nozzle 3 before a main arc is initiated and, if an electrical conduction is established between the said electrode 1 and a said workpiece 6 with the said pilot arc as a pilot flame, to form a plasma arc 7 constituting the said main arc, and then, if this occurs, the supply of the electric power to the said nozzle 3 is ceased to terminate the said pilot arc. Thereafter, cutting will proceed with the said main arc.

Therefore, with the said plasma cutting machine, if a cutting operation is performed with such a main arc generated, such a pilot arc comes to be generated each time the arc is initiated.

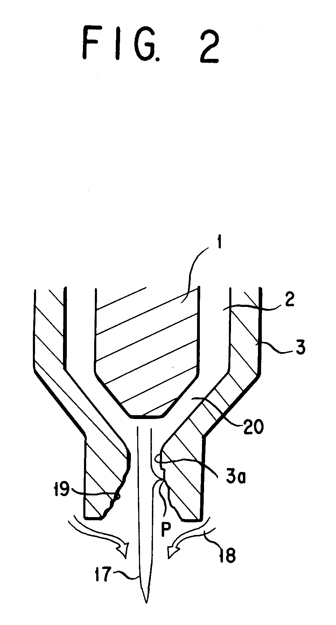

Since such a pilot arc is generated between the said electrode 1 and the said nozzle 3 as shown in Fig. 2 of the drawings attached hereto, the spot (arcing spot) P sustaining the said pilot arc 17 is exposed to the arc of a high temperature. Also, there is produced an air entraining flow 18 then in the vicinity of the forward end of the said nozzle 3 such that an air may be drawn to flow into the orifice 3a of the said nozzle 3. For this reason, if the said plasma gas is composed of a non-oxidizing gas, a damage 19 may develop due to an oxidation in the orifice 3a of the said nozzle 3. Consequently, each time a cutting is carried out, the wear of the said nozzle 3 unavoidably proceeds due to a said pilot arc 17 generated when the arc is initiated.

The pilot arc 17 is generated from a spark discharge that is caused when initially at the start of an arc a high frequency high voltage is applied across the said electrode 1 and the said nozzle 3. The pilot arc 17 is generated across the shortest distance between the said electrode 1 and the said nozzle 3. Subsequently, floating on a flow of the plasma gas 20, the arcing spot on the side of the said electrode 1 is moved to the center of the forward end thereof whereas the arcing spot P on the side of the said nozzle 3 passing through the said orifice 3a thereof is moved to a region of the outlet of the said nozzle orifice 3a, and then stays in the vicinity of the said outlet thereof until a main arc is generated.

Therefore, as shown in Fig. 2, it follows that the wear of the said nozzle 3 when the pilot arc is generated is concentrated and proceeds at a portion of the said outlet of the orifice 3a.

Thus, in the conventional plasma cutting machine, since owing to a pilot arc when an arc is started each time a cutting process is carried out the outlet portion of the said orifice 3a of the nozzle 3 in particular which largely affects the cutting quality predominantly and continuingly wears off in this manner, it is unavoidable that the cutting quality is deteriorating. In order to maintain an acceptable cutting quality, therefore, it has been necessary that the said nozzle 3 should be frequently exchanged.

Also, in cutting a mild steel material, it should be noted that the use of oxygen or a gas containing oxygen as the said plasma gas 20 is in general and customary but, as compared with a non-oxidizing gas therefor, makes the wear of the said nozzle 3 due to a pilot arc further acute and requires the said nozzle 3 to be replaced only for a cutting operation in several hours to several tens hours expended. Thus, the need to enhance the durability of the said nozzle 3 has been a big problem.

Thus, the requirement to replace the nozzle so often not only rises its cost and machine's running cost but also deteriorates the cutting efficiency arising from a loss time required to replace it, hence bringing about a lowering in the machine's productivity. Also, these are not all the deficiencies. Not only is personnel required who constantly monitors a reduction in the cutting quality due to a deterioration of the said nozzle 3, but also an acute wear of the said nozzle 3 constitutes a severe obstruction to the construction of an unmanned plasma cutting machine.

The present invention has been made with the foregoing problems taken into account and has its object to provide a plasma cutting method which is capable of markedly enhancing the durability of the said nozzle, maintaining an acceptable cutting quality over a prolonged time period, reducing the machine's running cost, and realizing an enhancement of the machine's productivity.

### SUMMARY OF THE INVENTION

In order to achieve the above mentioned object, there is provided a plasma cutting method for use with a plasma cutting apparatus having a nozzle with an orifice whereby a plasma arc is pinched and thereby narrowed and densified and a secondary gas flushing means for delivering a secondary gas so as to surround a forward end portion of the said nozzle,
characterized in that:
a non-oxidizing gas is caused to flow as a plasma gas to start the arc and a non-oxidizing gas is caused to flow as the said secondary gas to start the arc so that a non-oxidizing gaseous atmosphere may prevail in the vicinity of an outlet of the said nozzle.

According to the construction mentioned above in which a non-oxidizing gas is caused to flow as a plasma gas to start the arc, a secondary gas to start the arc is flushed so as to surround the orifice of the said nozzle outside thereof so that the atmosphere may not be drawn into the said orifice and the said secondary gas is also constituted by a non-oxidizing gas without oxygen as is the said plasma gas to establish the state in which oxygen is not existent in the vicinity of the said orifice of the nozzle, it can be seen that the wear of the orifice of the said nozzle will largely be reduced.

In the construction mentioned above, the said plasma gas may be switched from the said non-oxidizing gas to oxygen or a gas that contains oxygen, substantially concurrently with a shifting from a pilot arc into a main arc.

In the case mentioned above, it is desirable that the step of switching the plasma gas should be effected when the said pilot arc is generated.

Also, in the construction mentioned above, the said secondary gas may be switched from the said non-oxidizing gas to oxygen or a gas that contains oxygen, substantially concurrently with a shifting from from the said pilot arc to the said main arc.

In the case mentioned above, it is desirable that the steps of switching the said plasma gas and switching the said secondary gas should be both effected when the said pilot arc is generated or when the said main arc is generated.

Further, the construction mentioned above, the non-oxidizing plasma gas and secondary gas which are caused to flow when the arc is started may both be nitrogen, and the plasma gas which is caused to flow substantially when and after said pilot arc is shifted into said main arc and while a cutting process is continued may be oxygen and said secondary gas may then be an air or a mixed gas of oxygen and nitrogen.

Also, in the construction mentioned above, the plasma gas which is caused to flow substantially when and after pilot arc is shifted into a main arc and while a cutting process is continued may be a non-oxidizing gas.

Also, in the construction mentioned above, the secondary gas that is caused to flow substantially when and after the said pilot arc is shifted into the said main arc may be a non-oxidizing gas.

Further, it is desirable that the said plasma gas and the said secondary gas should both be nitrogen.

### BRIEF EXPLANATION OF THE DRAWINGS

The present invention will better be understood from the following detailed description and the drawings attached hereto showing certain illustrative embodiments of the present invention. In this connection, it should be noted that such embodiments as illustrated in the accompanying drawings are intended in no way to limit the present invention but to facilitate an explanation and understanding thereof.

In the accompanying drawings:
Fig. 1 is a cross sectional view that shows an example of the plasma torch for use in a plasma cutting method of the prior art;
Fig. 2 is a cross sectional view that shows the state in which a nozzle is wearing off due to a pilot arc when an arc is initiated in the plasma cutting method of the prior art;
Fig. 3 is a cross sectional view that shows an example of the plasma torch for use in a plasma cutting method according to the present invention;
Fig. 4 is a cross sectional view that shows another example of the plasma torch for use in the plasma cutting method according to the present invention;
Fig. 5 is a cross sectional view that shows still another example of the plasma torch for use in the plasma cutting method according to the present invention:
Fig. 6 is a circuit diagram that shows a gas supply circuit for use where only a plasma gas is switched in the practice of the method according to the present invention;
Fig. 7 is a circuit diagram that shows a gas supply circuit for use where both the plasma gas and a secondary gas are switched in the practice of the method according to the present invention;
Fig. 8 is a timing diagram that shows an example of the operation for use where only the plasma gas is switched in the practice of the method according to the present invention;
Fig. 9 is a timing diagram that shows another example of the operation for use where only the plasma gas is switched in the practice of the method according to the present invention;
Fig. 10 is a timing diagram that shows an example of the operation for use where both the plasma gas and the secondary gas are switched in the practice of the method according to the present invention; and
Fig. 11 is a timing diagram that shows another example of the operation for use where both the plasma gas and the secondary gas are switched in the practice of the method according to the present invention.

### BEST MODES FOR CARRYING OUT THE INVENTION

Hereinafter, suitable embodiments of the present invention with respect to a plasma cutting method will be set forth with reference to the accompanying drawings hereof.

An explanation will now be given of a certain embodiment of the plasma cutting method according to the present invention.

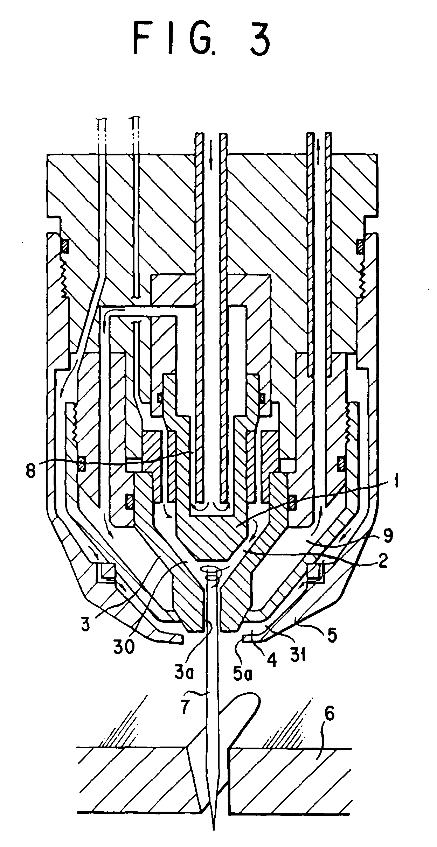

The method according to the present invention is carried out by using a plasma torch of typical construction as shown in Fig. 3.

According to the method of the present invention, it should be noted that in order for a pilot arc to be generated when an arc for a plasma cutting process is initiated, a non-oxidizing gas not containing oxygen is caused to flow as a plasma gas 30, and a secondary gas 31 which is a non-oxidizing gas as is the plasma gas 30 without oxygen is also caused to flow and discharged then outside of a said nozzle 3 so as to surround a said orifice 3a so that the atmosphere may not be drawn into the said plasma gas. Thus, by establishing the state in which oxygen may not be existent in the vicinity of the orifice 3a of the said nozzle 3, the wear of the said orifice 3a of the nozzle 3 can be largely reduced.

The experimentation conducted by the present inventors in order to demonstrate the above mentioned effect as well as the experimental results are set out below.

In this experimentation, the plasma torch used had a secondary gas supply means for delivering a secondary gas so as to surround an forward end portion of the nozzle. By repetitively igniting a pilot arc, the orifice of the nozzle was permitted to continuingly wear off. Then, the weights of the nozzle composed of copper and having the orifice with a diameter of 2.8 mm before and after the experiment were measured and a decrease in such weight was regarded as the wear of the orifice of the said nozzle.

Also, the kinds of the plasma gas and the secondary gas were selected in combination as listed below.
(1) The plasma gas is oxygen, and the secondary gas is air.
(2) The plasma gas is nitrogen, and the secondary gas is air.
(3) The plasma gas is nitrogen, and the secondary gas is nitrogen.

The operating conditions were as follows:
The plasma gas had a pressure of 2.0 kg/cm² and the secondary gas had a pressure of 3.5 kg/cm² with a current value of 50 amperes, an arcing number of 50 times and an arcing time duration of 3 seconds.
The measured values of the wear of the nozzle orifice which were obtained as the experimental results are listed in Table 1 below.

**Table 1**

| | (1) | (2) | (3) |
|---|---|---|---|
| Plasma gas | oxygen | nitrogen | nitrogen |
| Secondary gas | air | air | nitrogen |
| Nozzle wear [x10 mg] | 7.1 | 1.3 | 0.1 |

From the results shown in Table 1 above, it can be seen that if the plasma gas contains oxygen, the wear of the nozzle orifice due to a pilot arc is very acute. Also, if the plasma gas is constituted by a gas not containing oxygen (here, nitrogen), the wear of the nozzle orifice is considerably reduced, but it is still unavoidable that the wear proceeds to an extent that it affects the cutting quality. Further, if not only the plasma gas but also the secondary gas are constituted each by a gas not containing oxygen (here, nitrogen), there is almost no continuing wear of the nozzle orifice.

From the above mentioned experimental results, it has been proved that the wear of the nozzle orifice is largely related to the presence of oxygen.

More specifically, if oxygen is existent in the vicinity of the nozzle orifice, it has been proved that not only is the arcing spot of a pilot arc melted due to the fact that it is at an elevated temperature, but also it is continuingly oxidized under such a high temperature condition and that the oxidation of the nozzle orifice is a predominant cause of its wear.

Also, while oxygen which causes the oxidation of the nozzle orifice contained in the plasma gas is naturally furnished therefrom, this is not the sole case for a source of oxygen. Thus, if the nozzle orifice is exposed to the atmosphere (air), it has been proved that a plasma arc stream that is flushed at a high velocity out of the nozzle orifice acts to draw an air in the atmosphere along the nozzle orifice and therefore oxygen in the atmosphere as well can be a cause of oxidation and also causes the wear of the nozzle orifice to proceed.

Accordingly, as in the method of the present invention in which a non-oxidizing gas not containing oxygen is caused to flow as the plasma gas for a plasma cutting arc starting, and the said secondary gas which is a non-oxidizing gas as is the plasma gas without oxygen is also caused to flow and discharged then outside of the said nozzle so as to surround the said orifice so that the atmosphere may not be drawn into the said plasma gas and so that oxygen may not be existent in the vicinity of the orifice of the said nozzle, the wear of the said orifice of the nozzle can be largely reduced.

In a method as mentioned above, the said secondary gas 31 has a function whereby a plasma gas stream which contributes to a cutting process is shield from the atmosphere, that is, the function serves to shield from the atmosphere the outlet of the said nozzle 3 whereby the said plasma arc 7 is pinched and thereby narrowed and densified, and whose dimensional accuracy decisively affects the cutting quality.

In this case, the forward end portion of a said shield cap 5 that constitutes a said secondary gas passage 4 is so configured that as shown in Fig. 3, it may generally be tapered towards the torch forward end side and may thus be able to better shield the nozzle forward end portion efficiently with the said secondary gas 31. Then, so that with the aid of the said secondary gas 31 there may be no disturbance in the said plasma arc 7 which is flushed out of the said nozzle 3, an opening portion 5a of the said shield cap 5 must have a diameter that is greater than that of the orifice 3a of the said nozzle 3.

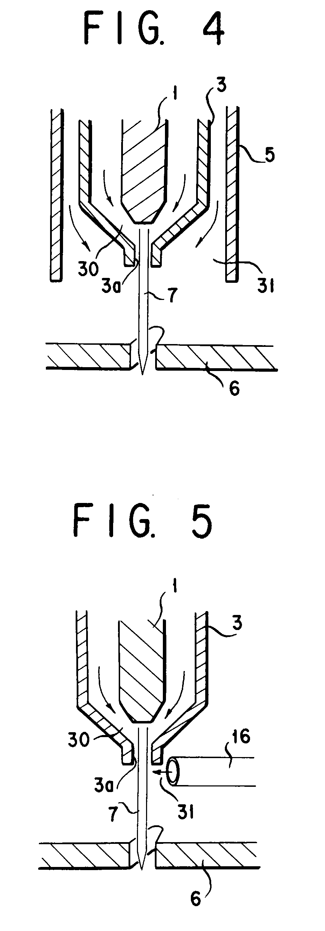

It should be noted at this point that other examples of the means for flushing the said secondary gas 31 include one in which the said shield cap 5 is made cylindrical as shown in Fig. 4 and one in which as shown in Fig. 5 the outlet of the said nozzle 3 has a secondary gas flushing nozzle 16 located at a side thereto which is adapted to laterally flush a said secondary gas 31 against the said outlet and thereby to shield the latter from the atmosphere.

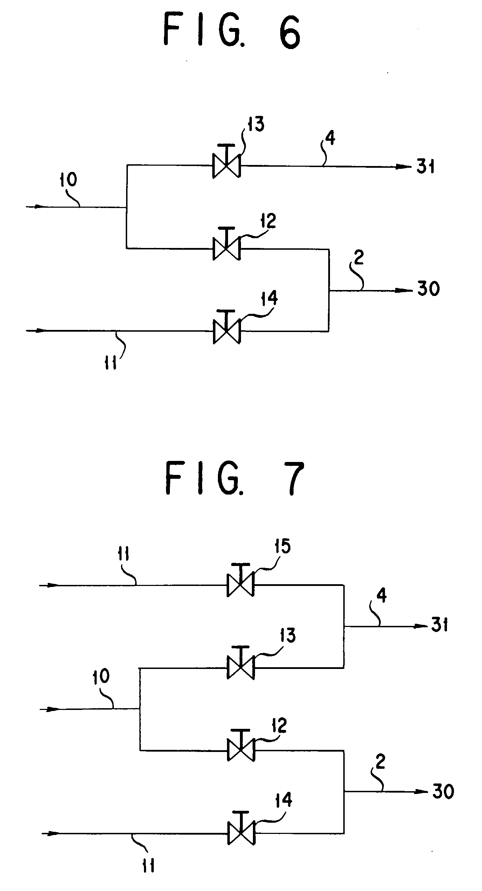

Next, it may be noted that a supply circuit for the said plasma gas 30 and the said secondary gas 31 for carrying out the method according to the present invention is constructed as shown in Fig. 6 or 7.

It should be noted here that the said circuit includes a non-oxidizing gas supply circuit 10 and an oxidizing supply circuit 11.

In the circuit of Fig. 6, only the said plasma gas 30 is designed to be switched. In order to completely replace the gas within the supply circuit before a said plasma arc is generated, an arc initiating plasma gas on/off valve 12 will be opened to cause a non-oxidizing gas to flow as the said plasma gas 30 in a said plasma gas passage 2 whereas a secondary gas on/off valve 13 will be opened to cause a non-oxidizing gas to flow as the said secondary gas 31 though the said secondary gas passage 4 a predetermined time interval before a pilot arc is generated. This will establish the state in which no oxygen is existent in the vicinity of the outlet of the said nozzle 3, in which state an arc is initiated by generating a pilot arc. After the pilot arc has been generated, the said arc initiating plasma arc gas on/off valve 12 will be closed and at the same time a cutting plasma gas on/off valve 14 will be opened to switch the plasma gas from the said non-oxidizing gas to oxygen or a gas that contains oxygen. Then, by permitting the latter to flow, a cutting operation will be initiated.

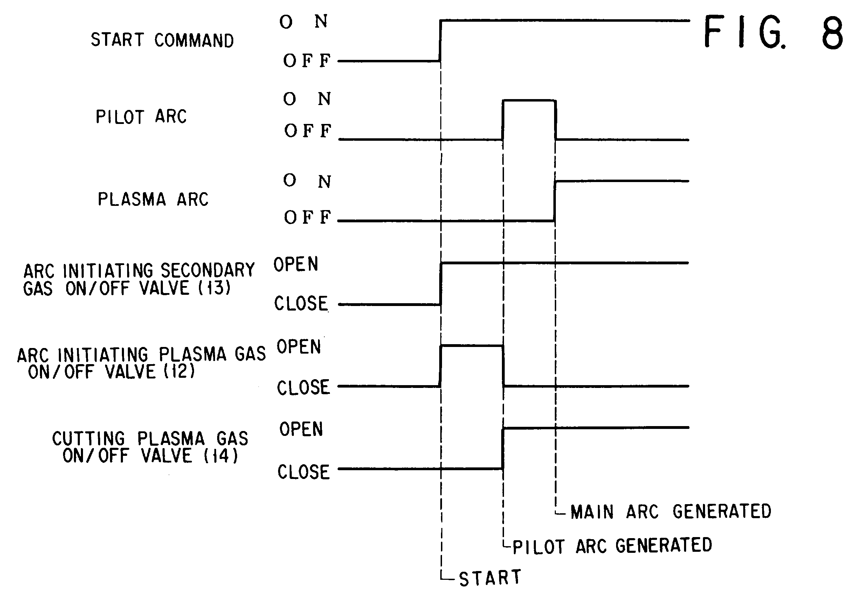

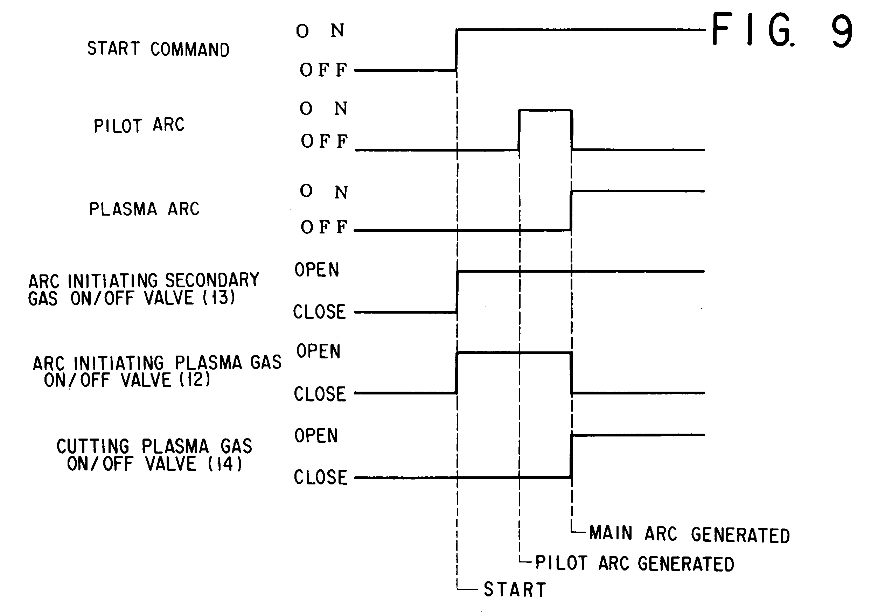

The timing diagram for the switching steps which are then performed is shown in Fig. 8 or 9. In the circuit of Fig. 8 the concurrent switching steps for both the valves 12 and 14 are effected when a pilot arc is generated. In the circuit of Fig. 9 the concurrent switching steps for both the valves 12 and 14 are effected when a main arc is generated.

Also, in the case of Fig. 7, both the said plasma gas 30 and the said secondary gas 31 are designed to be switched, where in order to completely replace the gases within the circuits before a plasma arc is generated, a predetermined time interval before the arc is initiated the said arc initiating plasma gas on/off valve 12 will be opened to cause a non-oxidizing gas to flow as the said plasma gas 30 through the said plasma gas passage 2 whereas the said arc initiating secondary gas on/off valve 13 will be opened to cause a non-oxidizing gas to flow as the said secondary gas 31 through the said secondary gas passage 4, to establish the state in which no oxygen is existent in the vicinity of the outlet of the said nozzle 3, in which state a pilot arc is generated to initiate an arc. After the pilot arc has been generated, the said arc initiating plasma gas on/off valve 12 will be closed and at the same time the said cutting plasma gas on/off valve 14 will be opened to switch the plasma gas 30 from the said non-oxidizing gas to oxygen or a gas that contains oxygen. Then, the said arc initiating secondary gas on/off valve 13 will be closed and the same time a cutting secondary gas on/off valve 15 will be opened to switch the secondary gas 31 from the said non-oxidizing gas to oxygen or a gas that contains oxygen. Then, by permitting the latter to flow, a cutting operation commences proceeding.

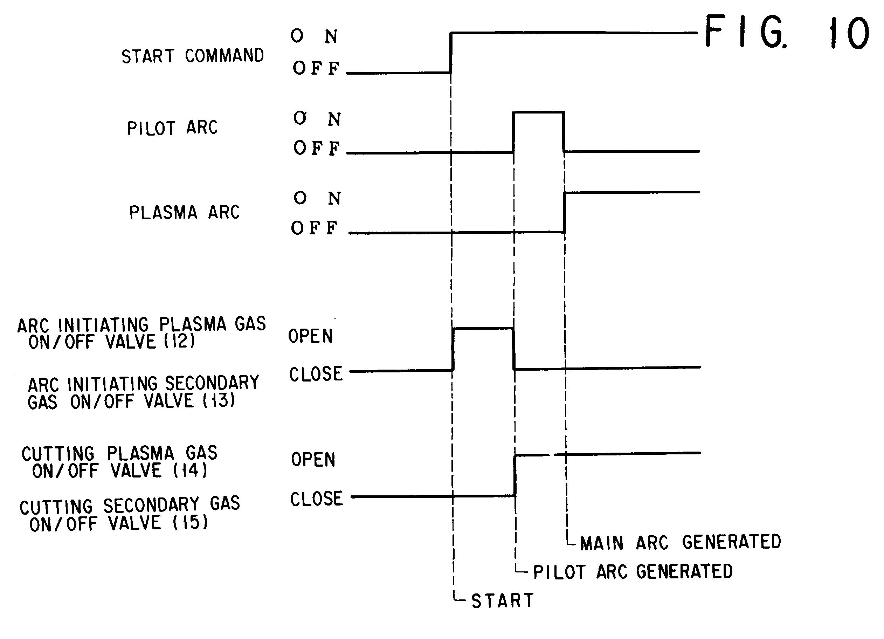

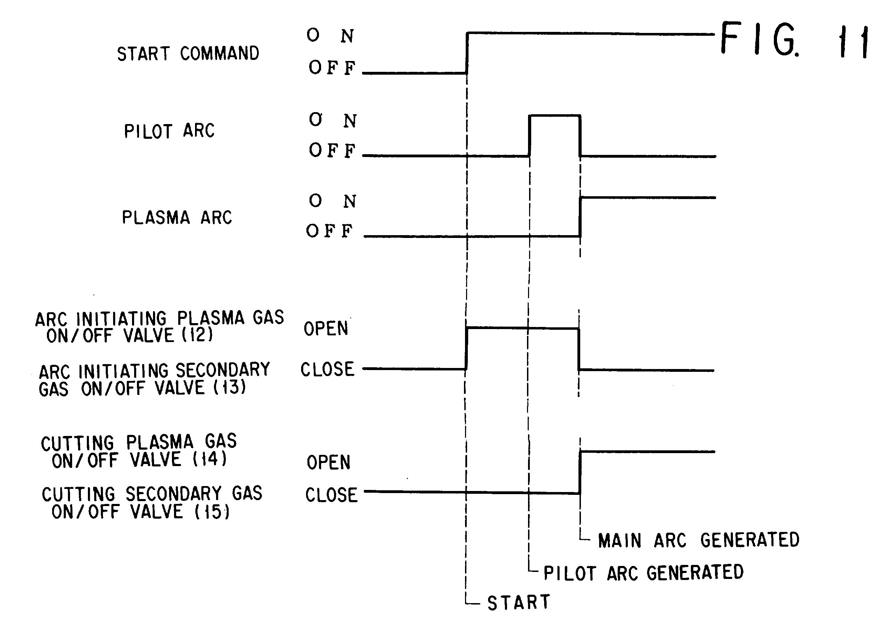

The timing diagram for the switching steps which are then performed for both the said gases 30 and 31 is shown in Fig. 10 or 11. In the circuit of Fig. 10, the concurrent switching steps for all the valves 12, 13, 14 and 15 are effected when a pilot arc is generated. In the circuit of Fig. 11, the concurrent switching steps for all the valves 12, 13, 14 and 15 are effected when a main arc is generated.

The time at which each of the said plasma and secondary gases is switched represents the time at which a signal is received that is produced when the occurrence of the pilot arc or the occurrence of the main arc is detected.

Also, a time at which a said gas is switched should better be established with the time of replacement of a said initiating non-oxidizing gas and a said cutting oxidizing gas at the orifice portion of the said nozzle 3 taken into consideration. Desirably the replacement should be completed at the said orifice portion of the nozzle 3 at the same time as a main arc occurs and then it would have no adverse influence on a cutting. However, the time period required for the replacement to be completed would actually be longer or shorter depending on the length of a gas piping. Therefore, if the gas piping length is so short that a said gas which has passed a said on/off nozzle may promptly arrive at the orifice portion of the said nozzle 3, the time at which a said gas is switched may be when a signal indicating the occurrence of a main arc is received. Also, if the gas piping length is so long that it may take longer a gas is replaced, it may be a time before a main arc is generated. An influence of gas replacement on a cutting process could be held at a minimum if the timing of a gas switching step is so established when the time interval for the gas replacement is short in sequence that any of a pilot arc occurrence sensing signal, a high frequency occurrence sensing signal and a start signal may be detected to switch the relevant on/off valve.

It should be noted at this point that in the method of the present invention, although it has been shown that a gas is switched when a pilot arc is generated and while a cutting process is continued, it would further be desirable that a non-oxidizing gas should be permitted to flow for a given time interval again after the cutting process has been completed as when the pilot arc was generated, and then the said gas piping will be filled with the said non-oxidizing gas. If this has been done, the time period required for the non-oxidizing gas to be allowed to flow will be shortened when the arc is then to be re-started and thus when the gas is again to be replaced within the said gas piping. This allows a next cutting operation to be initiated more promptly and a series of plasma cutting operations to be performed with an increased efficiency.

In the method of the present invention, an oxidizing gas is represented by oxygen, an air or a gas that contains oxygen such as a mixed gas of oxygen and nitrogen whereas a non-oxidizing gas is represented by a so-called inert gas such as nitrogen, argon, helium and hydrogen singly or in a combination.

Where a mild steel material is to be cut by plasma cutting, it is customary to make use of oxygen as the said plasma gas 30. In this case, nitrogen is utilized both as the said plasma gas 30 and the secondary gas 31 when an arc is started, and oxygen is utilized as the said plasma gas 30 and an air or a gas containing oxygen is utilized as the said secondary gas 31 after a pilot arc has been generated and while a cutting process proceeds.

It should be noted here that oxygen is utilized as the said plasma gas 30 for cutting because the cutting is promoted by a heat of reaction that is produced from the oxidation reaction between mild steel and an oxygen plasma. Also, in this case the said secondary gas 31 should be desirably a gas that contains oxygen. This is because if a non-oxidizing gas were utilized the oxygen purity of the said plasma gas 30 would be lowered and would exert a deleterious effect on plasma cutting. Also, the reason why nitrogen is utilized as the non-oxidizing gas when a pilot arc is generated is that it if made into a plasma would have characteristics which are substantially identical to those of oxygen and would less make the arc unstable when it is switched.

Also, when a stainless steel material or an aluminum material is to be cut, a non-oxidizing gas not containing oxygen is utilized as the said plasma gas 30. The said non-oxidizing gas includes nitrogen, argon, hydrogen and so forth singly or in a combination. In this case as well, the nozzle wear due to a pilot arc as mentioned above should proceed although it is much less than with the said oxygen plasma. For this reason, in a plasma cutting machine as well using such a non-oxidizing gas, it will be seen that the durability of the said nozzle 3 can be enhanced by causing a non-oxidizing secondary gas 31 to flow when a pilot arc is generated.

The operational effects which can be achieved according to the present invention are set forth below.
(1) The orifice of the said nozzle 3 can be shielded from the atmosphere when an arc is initiated, thus preventing it from being oxidized and damaged.
(2) Although a non-oxidizing gas is caused to flow when an arc is started but since it is switched to an oxidizing gas which is caused to flow in a cutting process, there can be no deterioration on its cutting quality.
(3) As a result of preventing the oxidizing damage, a favorable cutting quality can be maintained for a prolonged time period. In other words, an enhancement of the durability for the said nozzle 3 can be achieved.
(4) Owing to the enhancement of the durability for the said nozzle 3, its replacement in number is reduced, thus reducing the operator's labor.
(5) The reduction of replacement in number of the said nozzle 3, i. e., a prolonged replacement cycle time therefor, results in an enhanced contribution to the construction of an unmanned plasma cutting machine.
(6) The loss time required to replace the said nozzle 3 is eliminated, thus enhancing the cutting efficiency.
(7) Since the purchasing cost for the said nozzle 3 is lowered, it is expected to reduce the machine's running cost.

While the present invention has hereinbefore been set forth with respect to certain illustrative embodiments thereof, it will readily be appreciated by a person skilled in the art to be obvious that many alterations thereof, omissions therefrom and additions thereto can be made without departing from the essence and the scope of the present invention. Accordingly, it should be understood that the present invention is not limited to the specific embodiments thereof set out above, but includes all possible embodiments thereof that can be made within the scope with respect to the features specifically set forth in the appended claims and encompasses all the equivalents thereof.

## Claims

1. A plasma cutting method for use with a plasma cutting apparatus having a nozzle with an orifice whereby a plasma arc is pinched and thereby narrowed and densified and a secondary gas flushing means for delivering a secondary gas so as to surround a forward end portion of said nozzle,
characterized in that:
a non-oxidizing gas is caused to flow as a plasma gas to start the arc and a non-oxidizing gas is caused to flow as said secondary gas to start the arc so that a non-oxidizing gaseous atmosphere may prevail in the vicinity of an outlet of said nozzle.

2. A plasma cutting method as set forth in claim 1, characterized in that said plasma gas is switched from said non-oxidizing gas to a gas that contains at least in part oxygen, substantially concurrently with a shifting from a pilot arc into a main arc.

3. A plasma cutting method as set forth in claim 2, characterized in that the step of switching the plasma gas is effected when said pilot arc is generated.

4. A plasma cutting method as set forth in claim 2, characterized in that the step of switching the plasma gas is effected when said main arc is generated.

5. A plasma cutting method as set forth in claim 2, characterized in that said secondary gas is switched from said non-oxidizing gas to a gas that contains at least in part oxygen, substantially concurrently with a shifting from from said pilot arc to said main arc.

6. A plasma cutting method as set forth in claim 5, characterized in that the steps of switching said plasma gas and switching said secondary gas are both effected when said pilot arc is generated.

7. A plasma cutting method as set forth in claim 5, characterized in that the steps of switching said plasma gas and switching said secondary gas are both effected when said main arc is generated.

8. A plasma cutting method as set forth in claim 5, characterized in that the non-oxidizing plasma gas and secondary gas which are caused to flow when the arc is started are both nitrogen, and that the plasma gas which is caused to flow substantially when and after said pilot arc is shifted into said main arc and while a cutting process is continued is oxygen and said secondary gas is then an air or a mixed gas of oxygen and nitrogen.

9. A plasma cutting method as set forth in claim 1, characterized in that the plasma gas which is caused to flow substantially when and after a pilot arc is shifted into a main arc and while a cutting process is continued is a non-oxidizing gas.

10. A plasma cutting method as set forth in claim 9, characterized in that the secondary gas that is caused to flow substantially when and after said pilot arc is shifted into said main arc is a non-oxidizing gas.

11. A plasma cutting method as set forth in claim 10, characterized in that said plasma gas and said secondary gas are both nitrogen.
